# EUROPÄISCHE PATENTSCHRIFT

(11) **EP 1 078 564 B1**
(45) Veröffentlichungstag und Bekanntmachung des Hinweises auf die Patenterteilung: **28.01.2004**
(21) Anmeldenummer: 00117052.1
(22) Anmeldetag: 09.08.2000
(51) Int. Cl.: A01C 17/00

(54) **Schleuderdüngerstreuer**
Fertilizer broadcaster
Epandeur d'engrais centrifuge

(30) Priorität: 20.08.1999 DE 19939169
(43) Veröffentlichungstag der Anmeldung: 28.02.2001
(73) Patentinhaber: Amazonen-Werke H. Dreyer GmbH & Co. KG, 49205 Hasbergen (DE)
(72) Erfinder: Dreyer, Heinz, Dr.-Dipl.-Ing., 49205 Hasbergen (DE)

(56) Entgegenhaltungen:
- EP-A- 0 192 089
- EP-A- 0 303 325
- US-A- 3 738 546

## Beschreibung

Die Erfindung betrifft einen Schleuderdüngerstreuer gemäß des Oberbegriffes des Patentanspruches 1.

Ein derartiger Schleuderdüngerstreuer ist beispielsweise in der DE-OS 43 02 802 beschrieben. Bei diesem Düngerstreuer ist an dem unteren Bereich des Vorratsbehälters über ein Flanschelement ein Auslaufelement angeordnet, dem ein Dosierorgan zugeordnet ist. Dieses Dosierorgan ist als in der Bodenplatte angeordnete Auslauföffnung mit zugeordnetem Schieber, mittels dem die Auslauföffnung in ihrer Öffnungsgröße einstellbar ist, ausgebildet. Das Dosierorgan ist für einen bestimmten Mengenbereich ausgelegt. Insbesondere, wenn bei großen Arbeitsbreiten sehr große Mengen Material ausgebracht werden sollen, hat sich herausgestellt, dass die gewünschten großen Mengen nicht in jedem Falle ausbringbar sind.

Durch die EP 01 92 089 B1 ist ein Schleuderdüngerstreuer bekannt, bei dem die untere Trichterspitze ein Flanschelement aufweist, an welchem in austauschbarer Weise Austauschdosiereinrichtungen mit unterschiedlichen Einstell- und Regelmechanismen bzw. Steuermechanismen anordbar sind.

Der Erfindung liegt die Aufgabe zugrunde, eine verbesserte Anordnung der Dosiereinrichtung an dem Vorratsbehälter in austauschbarer Weise zu erreichen.

Diese Aufgabe wird erfindungsgemäß durch die kennzeichnenden Merkmale des Anspruches 1 gelöst. Infolge dieser Maßnahmen wird das Dosierorgan mit dem unteren Bereich der Behälterspitze ausgetauscht. Hierdurch ist eine einfachere Befestigung und Austauschbarkeit der Austauschauslaufelemente mit den verschiedenartig ausgebildeten Dosierorganen möglich.

In bevorzugter Weise ist vorgesehen, dass die Austauschauslaufelemente
- als Dosiereinrichtung mit hydraulischer Betätigungseinrichtung
   oder
- als Dosiereinrichtung mit elektrischer Betätigungseinrichtung
   oder
- als Dosiereinrichtung mit elektronischer Ansteuerungseinrichtung, die mittels standortspezifischer Ausbringsteuerung und/oder -Regelung ausgerüstet ist,
ausgebildet sind,
und dass die Austauschauslaufelemente mit der jeweiligen Dosiereinrichtung als ganzes lösbar an dem Anschlusselement angeordnet und gegen eine der genannten Austauschauslaufelemente mit der genannten Dosiereinrichtung austauschbar sind.

Eine besonders vorteilhafte Anordnung der Austauschdosiereinrichtung an dem Vorratsbehälter ergibt sich dadurch, dass das Anschlusselement sich unterhalb der Lagerung der Rühreinrichtung an dem Vorratsbehälter befindet.

Weiterhin ist vorgesehen, dass verschiedene, als Auslassbehälter ausgebildete Auslaufelemente mit zugeordneten Dosierorganen zur Anordnung an dem Flanschelement vorgesehen sind. Infolge dieser Maßnahmen kann in überraschend einfacher Weise das für den geforderten Ausbringmengenbereich entsprechend ausgelegte Auslaufelement mit zugehörigem Dosierorgan über das Flanschelement an den Vorratsbehälter angeordnet werden. Somit kann der Schleuderdüngerstreuer in einfacher Weise auch für die Ausbringung von sehr großen Ausbringmengen ausgerüstet werden.

Hierbei ist in bevorzugter Weise vorgesehen, daß Auslaufelemente mit unterschiedlich großen Auslauföffnungen vorgesehen sind, wobei die Größe der Auslaufelemente zumindest im Bereich der Auslauföffnung an die Größe der Auslauföffnung angepaßt ausgebildet ist. Hierdurch wird insbesondere erreicht, daß sehr kleine Restmengen bei der Entleerung des Vorratsbehälters im Vorratsbehälter verbleiben.

In vorteilhafter Weise lassen sich die Auslaufelemente aus nicht rostendem Material, insbesondere aus Kunststoffmaterial oder Metallguß herstellen.

Desweiteren ist es möglich, daß das Auslaufelement an dem Flanschelement verschiebbar gegenüber der Schleuderscheibe angeordnet ist. Infolge dieser Maßnahme kann eine Aufgabepunktverlagerung des Materials auf der Schleuderscheibe in einfacher Weise erreicht werden, um so den Schleuderdüngerstreuer beispielsweise in einfacher Weise von Normalstreuen auf Grenzstreuen oder umgedreht einzustellen. Hierbei ist in bevorzugter Weise vorgesehen, daß an dem Auslaufelement eine Skala angeordnet ist, an welcher die Öffnungsstellung des Schiebers einstellbar ist. Somit ist die Mengeneinstellvorrichtung für den Schieber an dem Auslaufelement angeordnet.

Weitere Einzelheiten der Erfindung sind den übrigen Unteransprüchen, der Beispielsbeschreibung und den Zeichnungen zu entnehmen. Hierbei zeigen
- Fig.1: den Schleuderdüngerstreuer in der Ansicht von hinten,
- Fig.2: ein an dem Vorratsbehälter angeordnetes Auslaufelement für kleine bis mittelgroße Ausbringmengen,
- Fig.3: ein an dem Vorratsbehälter angeordnetes Auslaufelement für Ausbringmengen bis zu einer sehr großen Menge,
- Fig.4: ein verschiebbar an dem Flanschelement angeordnetes Auslaufelement,
- Fig.5: einen weiteren Schleuderdüngerstreuer in Seitenansicht,
- Fig.6: den Schleuderdüngerstreuer in der Ansicht von hinten,
- Fig.7: den Schleuderdüngerstreuer mit einem anderen Aus laufelement und Dosiereinrichtung in Seitenansicht und
- Fig.8: den Schleuderdüngerstreuer gemäß Fig.7 in der Ansicht von hinten.

Der Schleuderdüngerstreuer weist den Vorratsbehälter 1 auf. Der Vorratsbehälter 1 ist an dem tragenden Rahmen 2 mit den Dreipunktkupplungselementen 3 angeordnet. Der Vorratsbehälter 1 ist durch ein dachförmiges Mittelteil 4 in die beiden Auslauftrichter 5 und 6 unterteilt. Die Auslauftrichter 5 und 6 gehen jeweils in ein Auslaßelement 7 über, dem jeweils ein Dosierorgan 8 zugeordnet ist. Unterhalb der Dosierorgane 8 befinden sich die mit Wurfschaufeln 9 besetzten Schleuderscheiben 10, welche in einem entgegengesetzten Drehsinn zueinander rotierend von einer Kraftquelle angetrieben werden.

Die Rührwellen 11 sind jeweils in den Auslaßelementen 7 und 8 gelagert.

Die Dosierorgane 9 weisen eine Bodenplatte 12 mit darin angeordneten, jedoch nicht dargestellten Auslauföffnungen auf, die über einen Schieber 13 in ihrer Öffnungsweite einstellbar ist, wobei die Öffnungsstellung des Schiebers 13 über die mit dem Anschlagelement 14 zusammenwirkende Skala 15 einstellbar ist.

Die Auslaufelemente 7 sind über die Flanschelemente 16 an den unteren Enden der Auslauftrichter 5, 6 angeordnet. Die Auslaufelemente 7 mit den zugehörigen Dosierorganen 8 sind für kleine bis mittlere Ausbringmengen vorgesehen. Die Größe der Auslaufelemente 7 ist im Bereich der Auslauföffnung an die Größe der Auslauföffnung angepaßt, so daß sich möglichst kleine Restmengen ergeben. Die Auslaufelemente 7 sind aus nichtrostendem Material, beispielsweise aus Kunststoffmaterial oder Metallguß hergestellt.

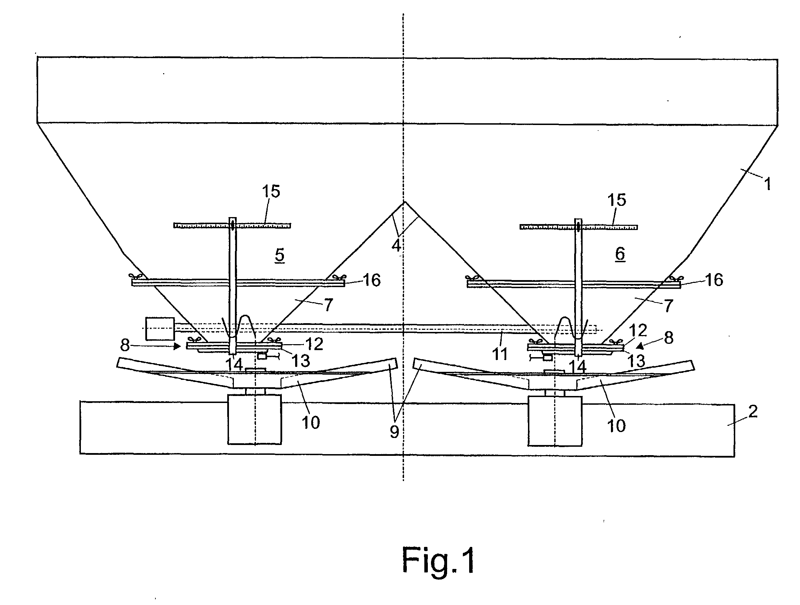

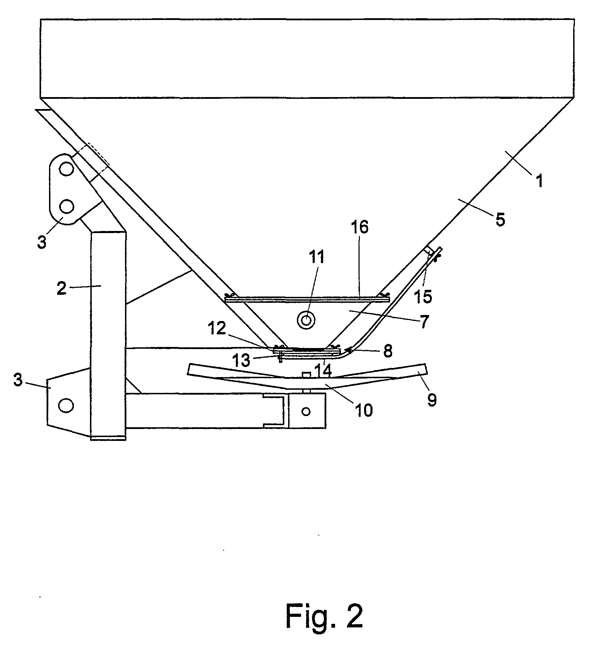

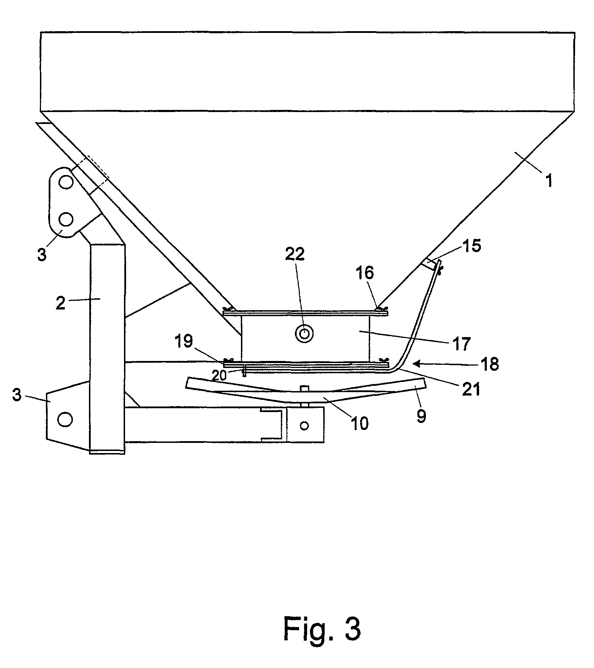

Wenn der Schleuderdüngerstreuer gemäß den Fig.1 und 2 für die Ausbringung von großen Ausbringmengen, insbesondere wenn auch große Arbeitsbreiten erreicht werden sollen, ausgestattet werden soll, werden an den Flanschelementen 16 die in Fig.3 dargestellten Auslaufelemente 17 angeordnet. Diese Auslaufelemente 17 weisen Dosierorgane 18 mit größeren Auslauföffnungen als die in den Auslaufelementen 7 in den Fig.1 und 2 befindlichen Auslauföffnungen auf. Somit sind die Dosierorgane 18 für die großen Ausbringmengen größer als die Dosierorgane 9 ausgelegt. Die Dosierorgane 18 der Auslaufelemente 17 weisen die in der Bodenplatte 19 angeordnete, jedoch nicht dargestellte Auslauföffnung auf, die über den Schieber 20 in ihrer Öffnungsweite einstellbar ist. Die Öffnungsstellung des Schiebers 20 wird durch den Anschlag 21 bestimmt, der anhand der Skala 15 einstellbar ist. Die Auslaufelemente 17 sind aus nichtrostendem Material, insbesondere Kunststoffmaterial oder Metallguß hergestellt. In der Seitenwand der Auslaufelemente ist das Rührelement 22 gelagert.

Wie aus der vorhergehenden Beschreibung anhand der Fig.1 und 3 entnehmbar ist, sind die Auslaufelemente 7 und 8 einerseits und 17 andererseits gegeneinander austauschbar und wahlweise an dem Flanschelement 16 entsprechend den Einsatzbedingung anzuordnen bzw. der Düngerstreuer ist entsprechend den geforderten Einsatzverhältnissen auszurüsten. Somit sind entsprechend des vorgesehenen Ausbringmengenbereiches ausgelegte Auslaßelemente 7, 8, 17 mit zugeordneten Dosierorganen 9, 18 in austauschbarer Weise vorgesehen.

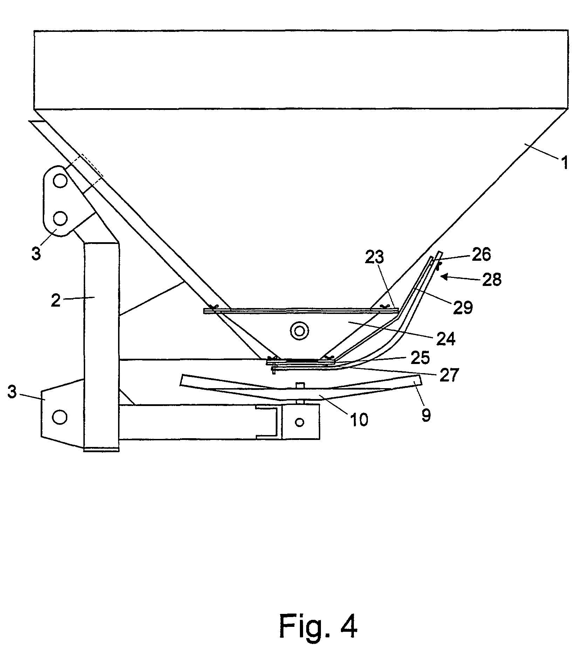

Weiterhin ist in einer weiteren Ausführungsform gemäß Fig.4 vorgesehen, daß das Flanschelement 23 zur Anordnung von gegenüber dem Vorratsbehälter 1 bzw. der Schleuderscheibe 11 verschiebbares Auslaufelement 24 vorgesehen ist. Hierzu kann entweder das Flanschelement 23 selbst mit Langlöchern, aufgrund derer das Auslaufelement 24 verschiebbar ist, versehen ist, oder an dem Flanschelement 23 ist eine Zwischenplatte vorgesehen, in welcher die Schiebeführungen zur Verschiebung des Auslaufelementes 24 gegenüber der Schleuderscheibe 11 angeordnet sind. Durch die Verschiebung des Auslaufelementes 24 mit den Dosierorganen 25 läßt sich der Aufbabepunkt des Materials auf der Schleuderscheibe 11 verlagern. An dem Auslaufelement 24 ist eine Skala 26 angeordnet, an welcher die Öffnungsstellung des Schiebers 27 über die Mengeneinstellvorrichtung 28 für den Schieber 27 einstellbar ist. Die Skala 26 und die Mengeneinstellvorrichtung 28 sind an einem an dem Auslaufelement 24 nach oben ragenden Halteelement 29 angeordnet. Zur Verstellung des Auslaufelementes 24 gegenüber der Schleuderscheibe 11 und dem Vorratsbehälter 1 ist ein nicht dargestelltes Einstellelement, welches motorisch ausgebildet oder angetrieben sein kann, zwischen dem Vorratsbehälter 1 und dem Auslaufelement 24 angeordnet.

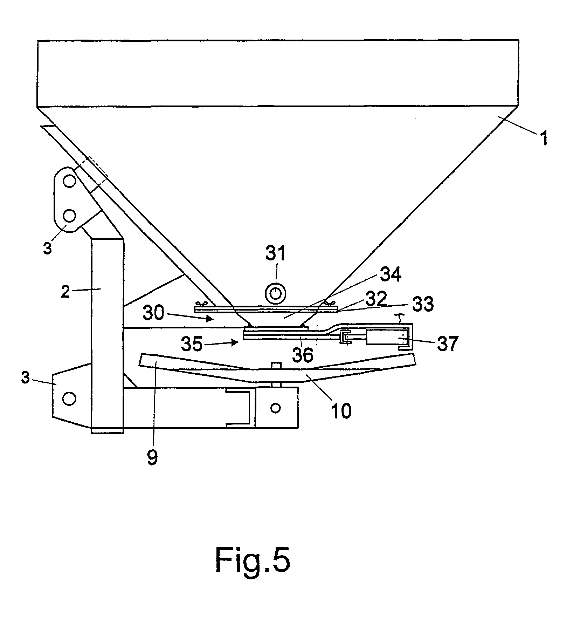

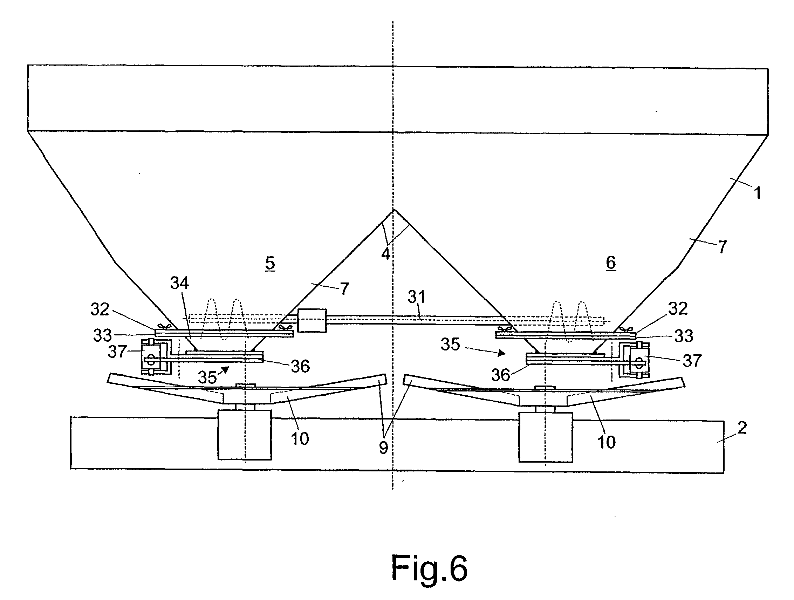

Der Schleuderdüngerstreuer gemäß den Fig.5 und 6 unterscheidet sich von dem Schleuderdüngerstreuer gemäß den Fig.1 bis 4 durch eine andere Ausbildung des unteren Auslauftrichterbereiches 30. Bei diesem Ausführungsbeispiel ist die Rührwelle 31 oberhalb der Flanschstelle 32 im Vorratsbehälter 1 gelagert. An dem Flanschelement 33 ist ein Austauschauslaufelement 34 mit einem Dosierorgan 35, dessen Schieber 36 über eine als Elektromotor ausgebildete elektrische Betätigungseinrichtung 37 betätigbar ist.

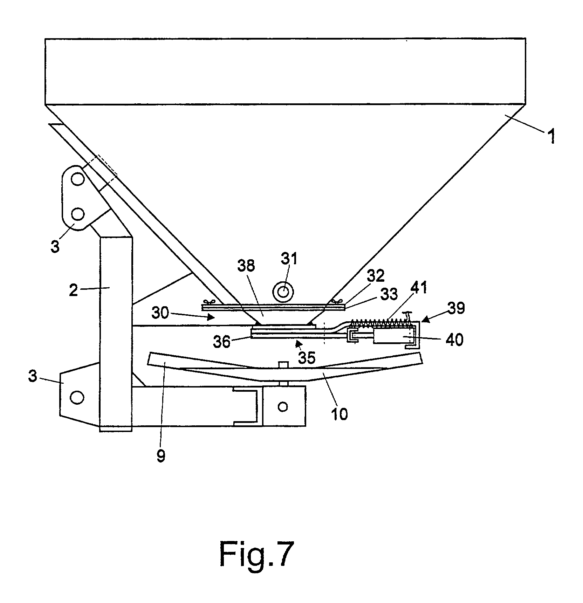

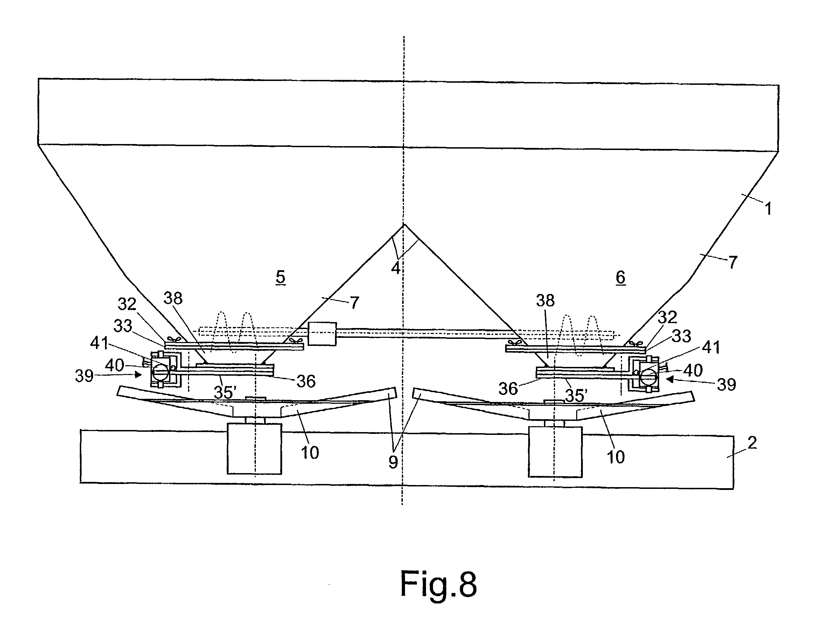

Bei dem Ausführungsbeispiel gemäß den Fig. 7 und 8 ist das Austauschauslaufelement 34 mit dem Dosierorgan 34' gegen das Austauschauslaufelement 38 mit dem mittels einer hydraulischen Betätigungseinrichtung 39, die den Hydraulikzylinder 40 und die Zugfeder 41 aufweist, in austauschbarer Weise angeordnet.

Es sind noch weitere, nicht dargestellte Austauschauslaufelemente mit anderen Betätigungseinrichtungen und Ansteuerungseinrichtungen zur Anordnung an dem Flanschelement 33 des Vorratsbehälters 1 vorgesehen. So kann beispielsweise die Dosiereinrichtung mit einer elektronischen Ansteuerungsvorrichtung, die mittels standortspezifische Ausbringung, Steuerung und Regelung ausgerüstet ist, zusätzlich ausgerüstet sein, und gegen das Austauschelement 38 oder 34 ausgetauscht werden.

An dem Flanschelement 33 sind somit Austauschauslaufelemente mit verschiedenartig ausgebildeten Dosierorganen zur Anordnung vorgesehen. Die Austauschauslaufelemente werden mit der jeweiligen Dosiereinrichtung als ganzes lösbar an dem Anschlußelement ausgebildeten Flanschelement 33 angeordnet und gegen eine der Austauschauslaufelemente mit der jeweils gewünschten Dosiereinrichtung ausgetauscht bzw. in austauschbarer Weise befestigt.

## Patentansprüche

1. Schleuderdüngerstreuer mit zumindest einem zumindest teilweise trichterförmig ausgebildeten Vorratsbehälter, an dessen unterem Bereich zumindest ein Auslaufelement, dem ein Dosierorgan zugeordnet ist, über zumindest ein Anschlusselement angeordnet ist, **dadurch gekennzeichnet, dass** zur Anordnung an dem Anschlusselement mehrere als Auslassbehälter ausgebildete Austauschauslaufelemente (7, 17, 24, 34, 38) mit verschiedenartig ausgebildeten Dosierorganen (18, 25, 35, 35') vorgesehen sind.

2. Schleuderdüngerstreuer nach Anspruch 1, **dadurch gekennzeichnet, dass** die Austauschauslaufelemente (7, 17, 24, 34, 38)
- - als Dosiereinrichtung (35') mit hydraulischer Betätigungseinrichtung (39)
- oder
- - als Dosiereinrichtung (35) mit elektrischer Betätigungseinrichtung (37)
- oder
- - als Dosiereinrichtung mit elektronischer Ansteuerungseinrichtung, die mittels standortspezifischer Ausbringsteuerung und/oder -Regelung ausgerüstet ist,
ausgebildet sind,
und dass die Austauschauslaufelemente (7, 17, 24, 34, 38) mit der jeweiligen Dosiereinrichtung (18, 25, 35, 35') als ganzes lösbar an dem Anschlusselement (16, 23, 33) angeordnet und gegen eine der genannten Austauschauslaufelemente mit der genannten Dosiereinrichtung austauschbar sind.

3. Schleuderdüngerstreuer nach einem oder mehreren der vorstehenden Ansprüche, **dadurch gekennzeichnet, dass** das Anschlusselement (33) sich unterhalb der Lagerung der Rühreinrichtung (31) an dem Vorratsbehälter (1) befindet.

4. Schleuderdüngerstreuer nach einem oder mehreren der vorstehenden Ansprüche, **dadurch gekennzeichnet, dass** verschiedene als Auslassbehälter ausgebildete Auslaufelemente (7, 17, 24, 34, 38) mit zugeordneten Dosierorganen (18, 25, 35, 35') zur Anordnung an dem Flanschelement (16, 23, 33) vorgesehen sind.

5. Schleuderdüngerstreuer nach Anspruch 4, **dadurch gekennzeichnet, dass** entsprechend des vorgesehenen Ausbringmengenbereiches ausgelegte Auslasselemente (7, 17, 24) mit zugeordneten Dosierorganen (8, 18, 25) in austauschbarer Weise vorgesehen sind.

6. Schleuderdüngerstreuer nach Anspruch 4, wobei das Dosierorgan als in einem Bodenelement angeordnete Auslauföffnung, deren Öffnungsweite durch einen mit der Auslauföffnung zusammenwirkendem Schieberelement einstellbar ist, ausgebildet ist, **dadurch gekennzeichnet, dass** Auslaufelemente (7, 17, 24) mit unterschiedlich großen Auslauföffnungen vorgesehen sind, wobei die Größe der Auslaufelemente (7, 17, 24) zumindest im Bereich der Auslauföffnung an die Größe der Auslauföffnung angepasst ausgebildet ist.

7. Schleuderdüngerstreuer nach einem oder mehreren der vorstehenden Ansprüche, **dadurch gekennzeichnet, dass** die Auslaufelemente (7, 17, 24) aus nichtrostendem Material, insbesondere aus Kunststoffmaterial oder Metallguss, hergestellt sind.

8. Schleuderdüngerstreuer nach einem oder mehreren der vorstehenden Ansprüche, **dadurch gekennzeichnet, dass** dem Dosierorgan (8, 18, 25) ein Rührelement (11, 22) zugeordnet ist, welches in der Seitenwand des Auslaufelementes (7, 17, 24) gelagert und mit dem Auslaufelement austauschbar ist.

9. Schleuderdüngerstreuer nach einem oder mehreren der vorstehenden Ansprüche, **dadurch gekennzeichnet, dass** das Auslaufelement (24) an dem Flanschelement (23) verschiebbar gegenüber der Schleuderscheibe (10) angeordnet ist.

10. Schleuderdüngerstreuer nach einem oder mehreren der vorstehenden Ansprüche, **dadurch gekennzeichnet, daß** an dem Auslaufelement (24) eine Skala (26) angeordnet ist, an welcher die Öffnungsstellung des Schiebers (27) einstellbar ist.

11. Schleuderdüngerstreuer nach einem oder mehreren der vorstehenden Ansprüche, **dadurch gekennzeichnet, daß** die Mengeneinstellvorrichtung (28) für den Schieber (27) an dem Auslaufelement (24) angeordnet ist.

12. Schleuderdüngerstreuer nach einem oder mehreren der vorstehenden Ansprüche, **dadurch gekennzeichnet, daß** an dem Auslaufelement (24) ein nach oben ragendes Halteelement (29) angeordnet ist, an welchem die Skala (26) und die Mengeneinstelleinrichtung (28) angeordnet ist.

13. Schleuderdüngerstreuer nach einem oder mehreren der vorstehenden Ansprüche, **dadurch gekennzeichnet, daß** in der Flanschplatte (23) am Vorratsbehälter (1) und/oder an dem Auslaufelement (24) Schiebeführungen angeordnet sind.

14. Schleuderdüngerstreuer nach einem oder mehreren der vorstehenden Ansprüche, **dadurch gekennzeichnet, daß** zwischen dem Vorratsbehälter (1) und dem Auslaufelement (24) Einstelleinrichtungen angeordnet sind.

## Claims

1. Centrifugal fertiliser spreader, having at least one hopper, which is at least partially configured in the form of a funnel, at least one outlet member being disposed at the lower region of said hopper via at least one connecting member, a metering member being associated with said outlet member, **characterised in that** a plurality of interchangeable outlet members (7, 17, 24, 34, 38) are provided for disposition on the connecting member, said outlet members being in the form of discharge vessels and having differently configured metering members (18, 25, 35, 35').

2. Centrifugal fertiliser spreader according to claim 1, **characterised in that** the interchangeable outlet members (7, 17, 24, 34, 38) are in the form of
- a metering means (35') having an hydraulic actuating means (39),
or
- a metering means (35) having an electrical actuating means (37),
or
- a metering means having an electronic actuating means, which is provided with a locus-specific distribution control and/or regulator,
and **in that** the interchangeable outlet members (7, 17, 24, 34, 38) are detachably disposed on the connecting member (16, 23, 33) as a whole with the respective metering means (18, 25, 35, 35') and are interchangeable with one of the above-mentioned interchangeable outlet members having the above-mentioned metering means.

3. Centrifugal fertiliser spreader according to one or more of the preceding claims, **characterised in that** the connecting member (33) is situated on the hopper (1) beneath the bearing surface of the agitating means (31).

4. Centrifugal fertiliser spreader according to one or more of the preceding claims, **characterised in that** various outlet members (7, 17, 24, 34, 38), which are in the form of discharge vessels, are provided with associated metering members (18, 25, 35, 35') for disposition on the flange member (16, 23,33).

5. Centrifugal fertiliser spreader according to claim 4, **characterised in that** outlet members (7, 17, 24), which are adapted to correspond to the envisaged output range, are provided with associated metering members (8, 18, 25) in an interchangeable manner.

6. Centrifugal fertiliser spreader according to claim 4, the metering member being in the form of an outlet aperture disposed in a base member, the width of opening of said aperture being adjustable by a slide member which co-operates with the outlet aperture, **characterised in that** outlet members (7, 17, 24) are provided with variably large outlet apertures, the size of the outlet members (7, 17, 24) being adapted to the size of the outlet aperture, at least in the region of the outlet aperture.

7. Centrifugal fertiliser spreader according to one or more of the preceding claims, **characterised in that** the outlet members (7, 17, 24) are produced from non-corrosive material, more especially from plastics material or cast metal.

8. Centrifugal fertiliser spreader according to one or more of the preceding claims, **characterised in that** the metering member (8, 18, 25) has associated therewith an agitating member (11, 22) which is mounted in the lateral wall of the outlet member (7, 17, 24) and is interchangeable with the outlet member.

9. Centrifugal fertiliser spreader according to one or more of the preceding claims, **characterised in that** the outlet member (24) is disposed on the flange member (23) so as to be displaceable relative to the centrifugal disc (10).

10. Centrifugal fertiliser spreader according to one or more of the preceding claims, **characterised in that** a scale (26) is disposed on the outlet member (24), the open position of the slide (27) being adjustable on the basis of said scale.

11. Centrifugal fertiliser spreader according to one or more of the preceding claims, **characterised in that** the quantity adjusting apparatus (28) for the slide (27) is disposed on the outlet member (24).

12. Centrifugal fertiliser spreader according to one or more of the preceding claims, **characterised in that** an upwardly protruding retaining member (29) is disposed on the outlet member (24), the scale (26) and the quantity adjusting apparatus (28) being disposed on said retaining member.

13. Centrifugal fertiliser spreader according to one or more of the preceding claims, **characterised in that** slidable guides are disposed in the flange plate (23) on the hopper (1) and/or on the outlet member (24).

14. Centrifugal fertiliser spreader according to one or more of the preceding claims, **characterised in that** adjustment means are disposed between the hopper (1) and the outlet member (24).

## Revendications

1. Epandeur centrifuge d'engrais comportant au moins un réservoir ayant au moins partiellement une forme de trémie et dont la zone inférieure comporte au moins un élément de sortie avec un organe de dosage relié par au moins un élément de raccordement,
**caractérisé en ce que**
plusieurs éléments de sortie remplaçables (7, 17, 24, 34, 38) avec des organes de dosage différents (18, 25, 35, 35') sont prévus pour être montés sur l'élément de raccordement.

2. Epandeur centrifuge d'engrais selon la revendication 1,
**caractérisé en ce que**
les éléments de sortie remplaçables (7, 17, 24, 34, 38) sont réalisés par :
- une installation de dosage (35') munie d'une installation d'actionnement hydraulique (39), ou
- une installation de dosage (35) avec une installation d'actionnement électrique (37), ou
- une installation de dosage avec une installation de commande électronique équipée d'une commande et/ou régulation de distribution spécifique à l'emplacement, et
- les éléments de sortie remplaçables (7, 17, 24, 34, 38) avec l'installation de dosage respective (18, 25, 35, 35') sont montés comme éléments globalement amovibles sur l'élément de branchement (16, 23, 33) et peuvent être remplacés par l'un des éléments de sortie remplaçables équipé de son installation de dosage.

3. Epandeur centrifuge d'engrais selon l'une quelconque des revendications précédentes,
**caractérisé en ce que**
l'élément de raccordement (33) se trouve en dessous du palier de l'agitateur (31) dans le réservoir d'alimentation (1).

4. Epandeur centrifuge d'engrais selon l'une quelconque des revendications précédentes,
**caractérisé par**
différents éléments de sortie (7, 17, 24, 34, 38) réalisés comme réservoirs de sortie avec des organes de dosage correspondants (18, 25, 35, 35') pour être installés sur l'élément en forme de bride (16, 23, 33).

5. Epandeur centrifuge d'engrais selon la revendication 4,
**caractérisé en ce qu'**
en fonction de la plage de quantités à distribuer, on prévoit des éléments de sortie (7, 17, 24) correspondants avec leurs organes de dosage (8, 18, 25) installés de manière remplaçable.

6. Epandeur centrifuge d'engrais selon la revendication 4, selon lequel l'organe de dosage est un orifice de sortie prévu dans un élément de fond et dont le degré d'ouverture se règle à l'aide d'un élément coulissant coopérant avec l'orifice de sortie,
**caractérisé en ce que**
des éléments de sortie (7, 17, 24) avec des orifices de sortie de tailles différentes sont prévus, la taille des éléments de sortie (7, 17, 24) étant adaptée au moins au niveau de l'orifice de sortie à la taille de cet orifice de sortie.

7. Epandeur centrifuge d'engrais selon l'une quelconque des revendications précédentes,
**caractérisé en ce que**
les éléments de sortie (7, 17, 24) sont réalisés en une matière non oxydable notamment en matière plastique ou en fonte de métal.

8. Epandeur centrifuge d'engrais selon l'une quelconque des revendications précédentes,
**caractérisé en ce qu'**
un agitateur (11, 22) est associé à l'organe de dosage (8, 18, 25), cet agitateur étant monté dans la paroi latérale de l'élément de sortie (7, 17, 24) et il est remplacé avec l'élément de sortie.

9. Epandeur centrifuge d'engrais selon l'une quelconque des revendications précédentes,
**caractérisé en ce que**
l'élément de sortie (24) est installé de manière coulissante par rapport au disque d'épandage (10) sur l'élément de bride (23).

10. Epandeur centrifuge d'engrais selon l'une quelconque des revendications précédentes,
**caractérisé en ce que**
l'élément de sortie (24) comporte une échelle ou graduation (26) sur laquelle se règle la position d'ouverture du tiroir (27).

11. Epandeur centrifuge d'engrais selon l'une quelconque des revendications précédentes,
**caractérisé en ce que**
le dispositif de réglage de débit (28) du tiroir (27) est prévu sur l'élément de sortie (24).

12. Epandeur centrifuge d'engrais selon l'une quelconque des revendications précédentes,
**caractérisé en ce que**
l'élément de sortie (24) comporte un élément de fixation (29) en saillie vers le haut et muni de l'échelle (26) et de l'installation de réglage de débit (28).

13. Epandeur centrifuge d'engrais selon l'une quelconque des revendications précédentes,
**caractérisé en ce que**
la plaque à bride (23) du réservoir d'alimentation (1) et/ou de l'élément de sortie (24) comporte des guides de coulissement.

14. Epandeur centrifuge d'engrais selon l'une quelconque des revendications précédentes,
**caractérisé par**
des installations de réglage entre le réservoir (1) et l'élément de sortie (24).
